# DEMANDE DE BREVET EUROPEEN

(11) **EP 2 282 263 A1**
(43) Date de publication de la demande: **09.02.2011**
(21) Numéro de dépôt: 09305724.8
(22) Date de dépôt: 31.07.2009
(51) Int. Cl.: G06F 9/445, G06F 21/00

(54) **Procédé de configuration fonctionnelle d'un circuit intégré pour carte à puce en vue d'une utilisation optimale de ses ressources**

(71) Demandeur: Gemalto SA, 92190 Meudon (FR)
(72) Inventeur: Arnal, Benoit, 92190, Meudon (FR); Mevaa, Charles, 92190, Meudon (FR)

(57) **Abrégé**

L'invention concerne un procédé de désactivation d'une ou plusieurs fonctions disponibles sur un circuit intégré comprenant au moins un processeur, une mémoire et plusieurs fonctions de traitement, cryptage et transmission des données, le procédé comprenant une étape de sélection des fonctions à désactiver, et une étape de désactivation desdites fonctions.

Elle concerne également un procédé de sélection d'un niveau de performance dudit circuit, par configuration de la fréquence de son horloge interne.

L'invention se **caractérise en ce que** les étapes de sélection et de désactivation sont mises en oeuvre par l'utilisateur, qui est un fabricant d'un produit incorporant ledit circuit, différent du fabricant du circuit, et par une étape de transmission, via un réseau de communication, à destination d'un équipement, par exemple serveur, accessible par le fabricant du circuit, d'une information représentative des fonctions effectivement actives pour l'utilisateur fabricant de produits.

## Description

La présente invention concerne un procédé de désactivation d'une ou plusieurs fonctions disponibles sur un circuit intégré visant à configurer l'architecture et donc les performances d'un circuit intégré.

Le circuit comprend typiquement au moins un processeur (par exemple CPU, microprocesseur ou unité de traitement), une mémoire, un ensemble de fonctions de traitement, sécurisation et transmission de données. Ces fonctions sont actives par défaut dans le circuit.

Le procédé consiste en la désactivation par le fabricant du produit incorporant le circuit, des fonctions qu'il juge non utiles pour l'usage prévu du produit, et avantageusement en la sélection de la fréquence de fonctionnement de l'horloge interne du circuit et du temps d'accès à la mémoire Flash/EEPROM interne.

La présente invention va être décrite ici dans le contexte de la fabrication d'un produit particulier, la carte à puce, mais elle peut s'appliquer à d'autres produits incorporant un circuit électronique, ce circuit électronique étant un circuit intégré, comprenant un processeur, une mémoire et des fonctions de traitement, sécurisation et transmission de données.

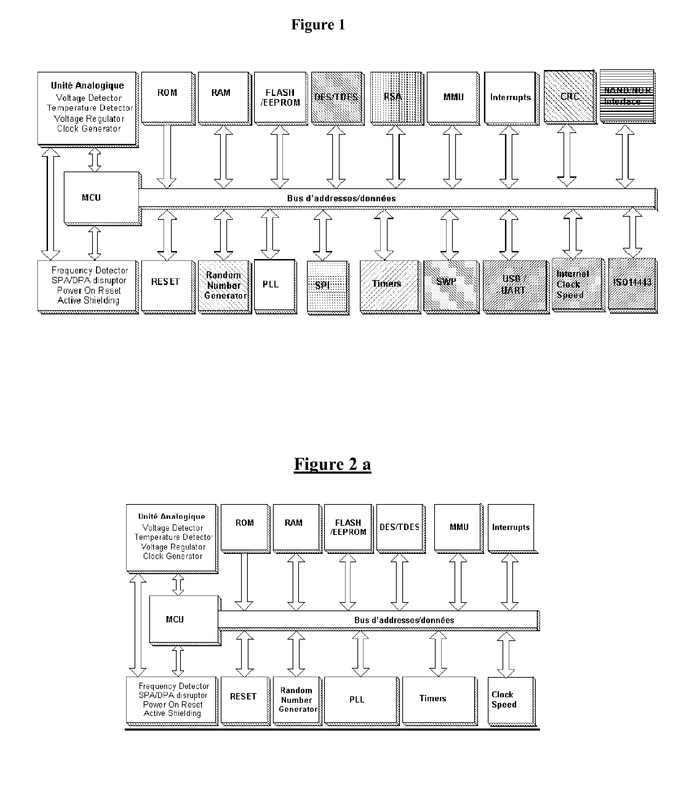

En référence à la Figure 1, selon la solution antérieure, un circuit intégré pour carte à puce peut comprendre un ensemble de fonctions dont certaines ne sont pas utilisées dans l'usage qui sera faite du produit incorporant ledit circuit intégré. Ainsi à titre d'exemple, les fonctions hachurées sur la Figure 1 peuvent ne pas être utilisées dans les applications de cartes SIM (Subscriber Identity Module) d'entrée de gamme. Il s'agit notamment de la fonction SWP (Single Wire Protocol, tel que normalisé par l'ETSI) de transmission de données sur un fil, et éventuellement des fonctions RSA, DES et TDES de cryptage de données, de la fonction UART, des interfaces Radio-Fréquence de type ISO 14443, des interfaces pour mémoires Flash externes NOR et NAND, de fonction d'interface SPI (Serial Peripheral Interface).

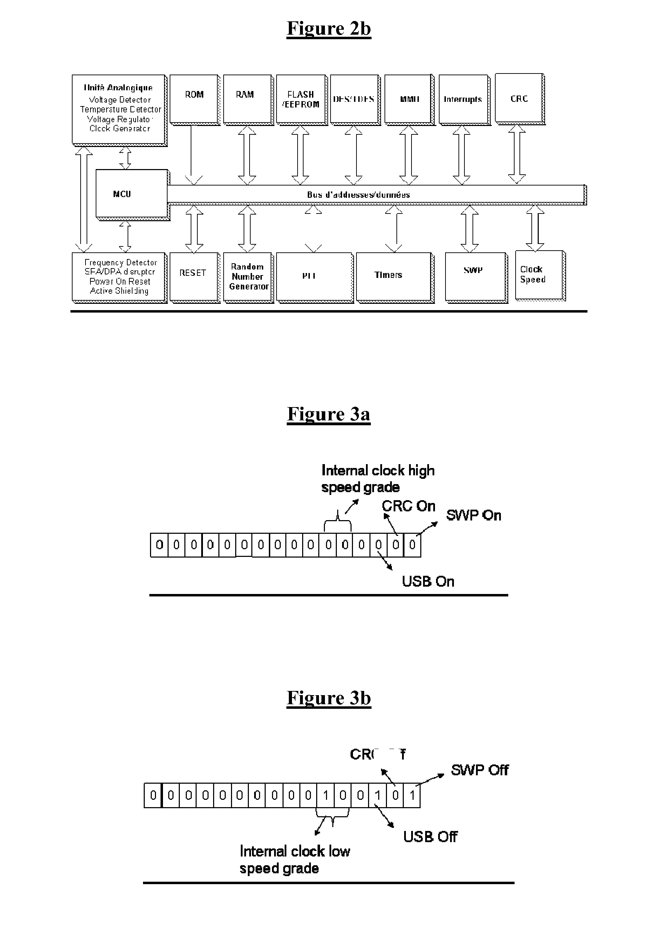

Pour offrir au juste prix un circuit intégré avec les fonctions répondant aux besoins de l'utilisateur, le fabricant de circuits intégrés doit alors développer plusieurs versions du circuit, qui diffèrent l'une de l'autre par les fonctions qui sont implémentées, comme illustré par les 2 circuits intégrés différents, respectivement des Figure 2a et 2b. Le mot « utilisateur » signifie ici le fabricant d'un produit qui incorpore le circuit intégré, et n'est pas lié à une notion d'usage ou d'utilisation du produit ou du circuit.

Les problèmes que pose cette solution sont les suivants :
- Le développement par le fabricant de circuits de différentes versions du circuit conduit à une fragmentation de son offre, et à des contraintes dans la gestion des stocks chez le fabricant et chez l'utilisateur,
- Le fabricant du produit incorporant le circuit, client du fabriquant du circuit, est alors contraint de choisir des circuits surdimensionnés pour certaines de ses applications et de payer pour des fonctions dont il n'a pas besoin

L'invention vise à remédier à ces problèmes. A cette fin, un procédé de désactivation d'une ou plusieurs fonctions disponibles d'un circuit comprenant au moins un processeur, une mémoire et plusieurs fonctions de traitement, sécurisation, et transmission des données, le procédé comprenant une étape de sélection des fonctions à désactiver, et une étape de désactivation desdites fonctions,
est caractérisé selon l'invention en ce que les étapes de sélection et de désactivation sont mises en oeuvre par l'utilisateur, qui est un fabricant d'un produit incorporant ledit circuit, différent du fabricant du circuit,
et par une étape de transmission, via un réseau de communication, à destination d'un équipement, par exemple serveur, accessible par le fabricant du circuit, d'une information représentative des fonctions effectivement actives pour l'utilisateur fabricant de produit.

Par ailleurs, de même que pour certaines applications il existe des fonctions qui ne sont pas utilisées, il n'est pas nécessaire que les performances du circuit, et en particulier la fréquence de son horloge interne ou le temps d'accès la mémoire Flash/EEPROM interne, soient utilisées au maximum de leurs possibilités. L'invention propose que l'utilisateur du circuit, fabricant du produit, puisse sélectionner un mode de fonctionnement « dégradé », correspondant à une ou plusieurs fréquences d'horloge plus basses ou à un temps d'accès plus long à la mémoire Flash/EEPROM interne, transmises au serveur du fabricant de circuit, afin de ne payer que pour une utilisation en mode « dégradé ».

Les autres objets de l'invention sont définis par les revendications annexées.

D'autres caractéristiques et avantages de la présente invention apparaîtront plus clairement à la lecture de la description qui suit en relation avec les dessins annexés correspondants dans lesquels :
- La Figure 1, déjà commentée, montre l'architecture d'un circuit pour carte à puce comprenant plusieurs fonctions,
- Les Figures 2a et 2b, également déjà commentées, montrent respectivement deux bloc-diagrammes schématiques d'architecture de circuit pour carte à puce, qui diffèrent l'une de l'autre par les fonctions implémentées,
- Les Figures 3a et 3b montrent à titre d'exemple, deux états respectifs de l'état de la zone mémoire OTP respectivement avant et après personnalisation par l'utilisateur fabricant du produit
- La figure 4 illustre sous forme de bloc-diagramme les éléments pour la mise en oeuvre du procédé selon l'invention.

### DESCRIPTION DETAILLEE DE L'INVENTION

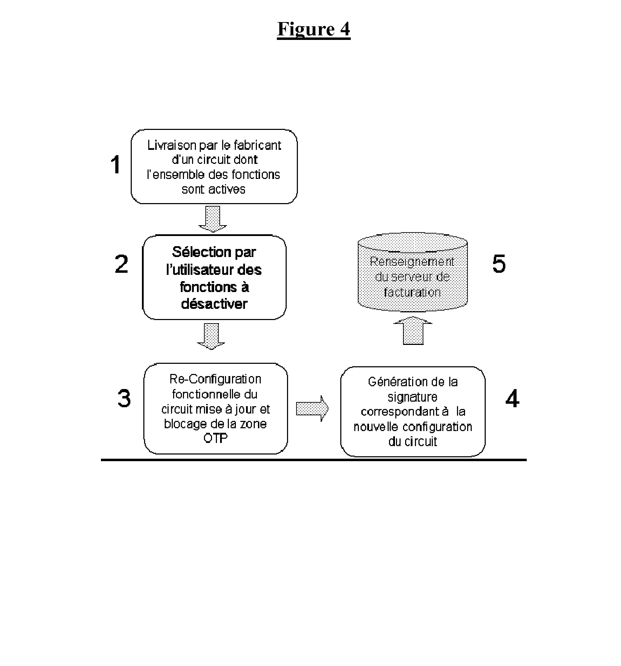

En référence à la figure 4, le fournisseur de circuits livre à son client 1, selon l'invention, des circuits non différenciés comprenant un processeur identique, une taille de mémoire identique, et un ensemble de fonctions de traitement, cryptage et de transmission de données actives par défaut.

Il est proposé d'utiliser un outil de développement fourni par le fabricant de circuit. L'outil de développement est utilisé par son client, le fabricant de produits (dit « utilisateur »), pour désactiver une ou plusieurs fonctions qui ne seront pas utilisées en fonction de l'usage prévu du produit concerné. En effet, il est proposé que les circuits soient livrés avec des fonctions initialement dans un état « actif » et que l'outil de développement soit utilisé pour «désactiver » les fonctions que 1' fabricant de produit désire désactiver. Cet outil de développement invite le fabricant de produits à saisir et à transmettre vers le circuit non différencié, une information sur la liste des fonctions désactivées. La désactivation de fonctions ne doit pas altérer le fonctionnement des autres fonctions ni le reste du circuit. Il est proposé à titre d'exemple, comme fonctions désactivables selon l'application et le marché, les fonctions suivantes de la carte à puce: USB (Universal Serial Bus), RSA, SWP, CRC, DES/TDES, RNG, Timer, SPI, Gestion Mémoires externes Flash NOR et/ou NAND, Interface ISO 14443.

L'outil de développement invite par ailleurs l'utilisateur, fabricant de produits, à spécifier le niveau de performance choisi pour le circuit ; il s'agit par exemple de la fréquence de l'horloge interne du circuit.

Un mécanisme de configuration du circuit également fourni par le fabricant de circuits, charge 3 les données dans le circuit pour la configuration de ce dernier. Dans la mémoire, une zone dite OTP (One Time Programming), programmable une fois par l'utilisateur et dont le contenu est inaltérable, est dédiée au stockage de la configuration du circuit.

L'information correspondant à la de vitesse de fonctionnement de l'horloge interne peut être stockée dans la zone OTP sous forme de 2 bits correspondant par exemple à 3 états : 00 pour la fréquence maximale, 01 pour la fréquence médiane et 10 pour la fréquence maximale.

Les figures 3a et 3b illustrent l'état de la zone OTP avant et après personnalisation ou configuration du circuit par l'utilisateur. Comme on le voit sur ces figures, les fonctions SWP et USB ont été désactivés tandis que la fonction CRC a été maintenue.

Une fois le circuit configuré, il est procédé à un verrouillage des fonctions désélectionnées et du niveau de performance choisi. Cette étape de verrouillage par l'unité de gestion de la configuration du circuit, garantit au fabricant de circuit la configuration Utilisateur réelle.

L'information de configuration du circuit permet de calculer une signature 4 de sécurité qui prendrait en compte typiquement également un numéro de série du circuit, et éventuellement un identifiant de référence commerciale du circuit.

L'information comprenant la liste des fonctions désactivées et la vitesse de l'horloge interne, ainsi que la signature associée est ensuite transmise via un réseau de communication, à destination d'un serveur 5, accessible par le fabricant du circuit.

Ainsi, une information représentative de la nouvelle configuration du circuit sélectionnée par le fabricant du produit est transmise au fournisseur du circuit identifié par son numéro de série, à des fins de facturation notamment. Cette transmission peut être effectuée à tout moment notamment lors de la fabrication du produit. Un accusé de réception par le serveur 5 peut également constituer une condition de déblocage de fonctionnement général du circuit, seules les fonctions élémentaires de transmission au serveur 5 des informations précitées étant autorisées préalablement à cet accusé de réception.

A noter que l'utilisation d'une zone OTP pour stockage de la configuration du circuit n'est qu'une méthode d'implémentation possible parmi d'autres.

## Revendications

1. - Procédé de désactivation d'une ou plusieurs fonctions disponibles sur un circuit intégré comprenant au moins un processeur, une mémoire et plusieurs fonctions de traitement, cryptage, et transmission des données, le procédé comprenant une étape de sélection des fonctions à désactiver, et une étape de désactivation desdites fonctions,
**caractérisé en ce que** les étapes de sélection et de désactivation sont mises en oeuvre par un fabricant d'un produit incorporant ledit circuit qui est différent du fabricant du circuit,
et par une étape de transmission, via un réseau de communication, à destination d'un équipement, par exemple serveur, accessible par le fabricant du circuit, d'une information représentative des fonctions effectivement actives pour l'utilisateur fabricant de produit.

2. - Programme d'ordinateur comprenant des instructions exécutables stockées dans une mémoire d'un circuit comprenant un processeur et une mémoire totale, pour la mise en oeuvre d'une méthode, la méthode étant **caractérisée en ce qu'**elle comprend :
- une étape de désactivation d'une ou plusieurs fonctions disponibles sur un circuit intégré comprenant au moins un processeur, une mémoire et plusieurs fonctions de traitement, cryptage, et transmission de données,
- une étape de sélection du niveau de performance du circuit, typiquement de la fréquence de fonctionnement de l'horloge interne,
- une étape de verrouillage, par une unité de gestion de la configuration du circuit, de l'utilisation des fonctions désactivées et des niveaux de performances non choisis, et
- une étape de transmission via un réseau de communication, à destination d'un serveur, accessible par le fabricant du circuit, d'une information représentative de configuration du circuit ainsi sélectionnée par le fabricant du produit

3. - Carte à puce comprenant un programme d'ordinateur tel que revendiqué en revendication 2.
